# EUROPÄISCHE PATENTANMELDUNG

(11) **EP 0 594 039 A1**
(43) Veröffentlichungstag der Anmeldung: **27.04.1994**
(21) Anmeldenummer: 93116489.1
(22) Anmeldetag: 12.10.1993
(51) Int. Cl.: G01G 11/08, G01G 11/00, G01G 13/24

(54) **Dosiervorrichtung für Schüttgut**

(30) Priorität: 19.10.1992 DE 4235162
(71) Anmelder: FRIEDRICH THEYSOHN GmbH, D-32547 Bad Oeynhausen (DE)
(72) Erfinder: Klose, Reinhard, 31737 Rinteln (DE); Krüger, Ernst, 49124 Georgsmarienhütte (DE)
(74) Vertreter: Cohausz & Florack

(57) **Zusammenfassung**

Eine für eine volumetrische Dosierung von Schüttgut eingerichtete Dosiervorrichtung läßt sich durch den Einbau einer aus Wiegebehälter (4) und Verwiegeeinheit (6a,6b) bestehenden Baueinheit auf eine gravimetrische Dosierung umrüsten. Dazu wird die Baueinheit (4,6a,6b) in einem Behälter (5) der Dosiervorrichtung eingebaut, die eine über dem Behälterboden (5a) angeordnete, drehbar angetriebene Lochplatte (10) aufweist, deren Löcher als Dosierkammern (10a) dienen und bei Drehung eine Austragsöffnung (5b) im Boden überstreichen. Die Dosierkammern sind bodenseitig durch den Boden (5a) und zum Behälterinneren durch eine Abdeckung (13) bis auf einen Bereich abgedeckt, der über einen seitlich angeordneten Materialauslauf (4a) des Wiegebehälters beschickt wird.

## Beschreibung

Die Erfindung bezieht sich auf eine Dosiervorrichtung für Schüttgut mit einem auffüllbaren, in seinem Boden eine Austragsöffnung aufweisenden Behälter und einer über dem Behälterboden angeordneten, drehbar angetriebenen Lochplatte, deren als Dosierkammern ausgebildete, bei Drehung der Austragsöffnung überstreichende Löcher bodenseitig bis auf die Austragsöffnung und auf der dem Innenraum des Behälters Zugewandten Seite im Bereich der Austragsöffnung durch stationäre Abdeckungen abgedeckt sind.

Mit solchen aus der Praxis und druckschriftlich (Hermann Gericke: Dosieren von Feststoffen (Schüttgütern), Rielasingen, 1989, Seite 99) bekannten Dosiervorrichtungen ist eine volumetrische Dosierung möglich, weil jede Dosierkammer der Lochplatte nur ein vorbestimmtes Volumen aufnehmen kann. Eine volumetrische Dosierung reicht aber in vielen Fällen nicht aus, weil sie zu ungenau ist. Kausal für diese Ungenauigkeit ist, daß die Schüttdichte und die Rieselfähigkeit des Schüttgutes schwanken. Bezogen auf das Gewicht können sich ohne weiteres Ungenauigkeiten von 10 % ergeben.

Um den Austrag von Schüttgut gravimetrisch zu erfassen, ist ein mit Schüttgut beschickbarer Füllbehälter mit einem bodenseitigen Auslauf bekannt (US-PS 5 125 535), aus dem kontinuierlich Schüttgut auf eine sehr flexible, auf einer starren Platte abgestützte, rotierende Scheibe fließt. Diese rotierende Scheibe transportiert das auf ihr abgelegte Schüttgut über ein Segment der starren Platte, das von einer Waage getragen wird. Der Ausschlag der Waage hängt ab von dem Volumen und der Masse des von der flexiblen Scheibe im Bereich des Segmentes getragenen Schüttgutes.

Der Erfindung liegt die Aufgabe zugrunde, die bekannte Dosiervorrichtung für die volumetrische Dosierung auf eine gravimetrische Dosierung umzurüsten.

Diese Aufgabe wird bei der Dosiervorrichtung der eingangs genannten Art dadurch gelöst, daß in dem Behälter mit der Lochplatte ein mit einem unteren seitlich angeordneten Materialauslauf versehener Wiegebehälter frei beweglich von einer Verwiegeeinheit getragen ist, wobei der seitlich angeordnete Materialauslauf mit geringem Abstand von der Lochplatte über deren nicht abgedeckten Bereich angeordnet ist.

Bei der Erfindung hat der Behälter nur noch die Funktion eines Gehäuses. Das Schüttgut nimmt der Wiegebehälter auf. Wegen des seitlichen Materialauslaufes ergibt sich eine Massenstromentkopplung gegenüber dem aus dem Wiegebehälter ausgelaufenen, auf der Lochplatte sich stauenden Schüttgut. Die Menge des auslaufenden Schüttgutes aus dem Wiegebehälter wird durch den Rückstau des Schüttgutes auf der Lochplatte bestimmt, ohne daß dieser Rückstau das Meßergebnis der Verwiegeeinheit verfälschen kann. Dies liegt daran, daß sich wegen des seitlichen Materialauslaufes keine durchgehende senkrechte Schüttgutsäule bilden kann, die das Schüttgut im Wiegebehälter oder den Wiegebehälter unterstützt. Insgesamt gesehen bringt die Erfindung den Vorteil, daß sich herkömmliche volumetrisch arbeitende Dosiervorrichtungen mit geringem Aufwand auf die gravimetrische Dosierung umrüsten lassen.

Die Verwiegeeinheit kann in verschiedener Weise ausgebildet sein. So kann sie an mehreren Meßzellen abgestützt sein, es ist aber auch möglich, daß der Wiegebehälter von einer asymmetrisch angeordneten Wiegemeßzelle beispielsweise über einen Tragarm, insbesondere einem als Gabel ausgebildeten Tragarm, getragen ist.

Um das Nachrüsten zu erleichtern, bilden der Wiegebehälter und die Verwiegeeinheit eine Baueinheit, die von einem als Adapter ausgebildeten Zwischenstück getragen ist, das einerseits an dem Füllbehälter und andererseits an dem die Lochplatte aufweisenden Behälter angeschlossen ist.

Nach einer weiteren Ausgestaltung der Erfindung ist eine Steuereinrichtung für den Antrieb der Lochscheibe vorgesehen, die in Abhängigkeit von von der Verwiegeeinheit gelieferten Meßwerten über das aktuelle Gewicht des Wiegebehälters die Drehzahl der Lochscheibe steuert.

Im folgenden wird die Erfindung anhand einer ein Ausführungsbeispiel schematisch darstellenden Zeichnung näher erläutert. Im einzelnen zeigen:

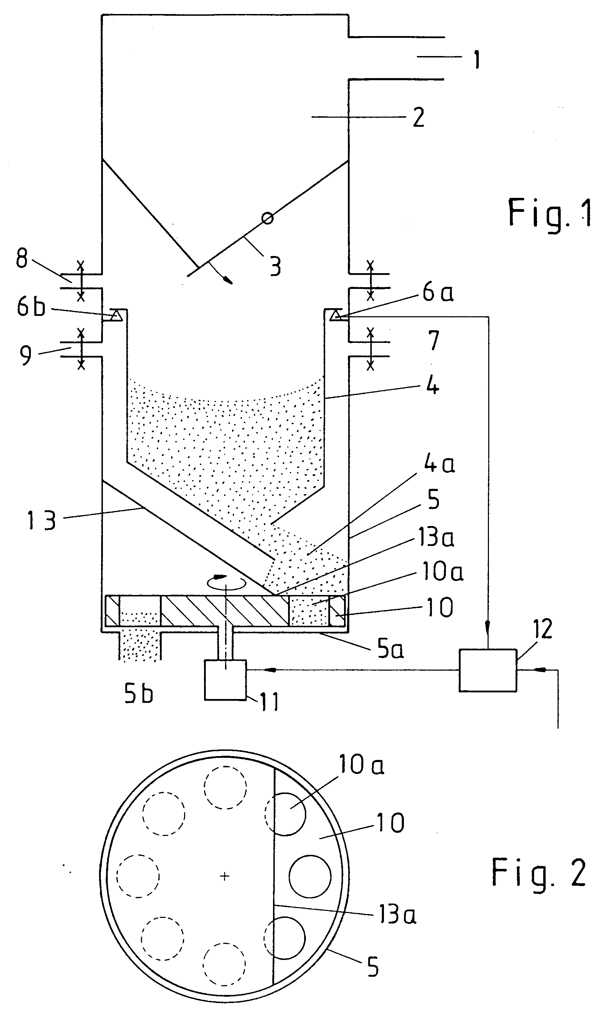

- Figur 1: eine Dosiervorrichtung für Schüttgut in Seitenansicht
**und**
- Figur 2: die Dosiervorrichtung der Figur 1 im Schnitt nach der Linie I-I der Figur 1.

Die Dosiervorrichtung für Schüttgut weist einen über einen Zulauf 1 mit Schüttgut beschickbaren Füllbehälter 2 auf, der bodenseitig über eine Klappe 3 von Zeit zu Zeit in einen unter ihm befindlichen Wiegebehälter 4 entleerbar ist. Der Wiegebehälter 4 ist in einem größeren Behälter 5 untergebracht und wird von Wiegezellen 6a,6b getragen, die ihrerseits von einem als Adapter ausgebildeten Zwischenstück 7 getragen sind. Das Zwischenstück 7 ist über Flanschverbindungen 8,9 mit dem Füllbehälter 2 und dem unteren Behälter 5 starr verbunden. Auf dem Boden 5a des Behälters 5 ist eine Lochplatte 10 drehbar gelagert. Sie ist von einem Antriebsmotor 11 angetrieben, der von einer Steuereinrichtung 12 gesteuert wird. Die Löcher der Lochplatte 10 sind als Dosierkammern 10a ausgebildet. Bei Drehung der Lochplatte 10 überstreichen sie eine Austragsöffnung 5b im Boden 5a. Im übrigen Bereich sind sie durch den Boden 5a abgedeckt. Auf der dem Innenraum des Behälters 5 zugewandten Seite sind sie durch eine Abdeckung 13 zumindest im Bereich der Austragsöffnung 5b bis auf einen der Austragsöffnung 5b gegenüberliegenden Bereich durch eine Abdeckung 13 abgedeckt. Die Abdeckung 13 weist einen Abstreifer 13a auf, der bei Drehung der Lochplatte 10 diese überstreicht und dafür sorgt, daß die Dosierkammern 10a nur bis zum oberen Rand gefüllt werden.

Der Wiegebehälter 4 weist im unteren Bereich einen zur Seite weisenden Materialauslauf 4a auf, der bezogen auf die Abdeckung 13 so angeordnet ist, daß das auslaufende Schüttgut auf den von der Abdeckung 13 nicht abgedeckten Bereich der Lochplatte 10 gelangt. Die Menge des ausfließenden Schüttgutes regelt sich selbsttätig durch die Aufhäufung des von den Dosierkammern 10a nicht abgezogenen Schüttgutes. Diese Aufhäufung führt allerdings nicht zu einer Verfälschung der Meßwerte der Verwiegeeinheit, weil wegen des seitlichen Materialauslaufes 4a sich keine senkrechte gegen den Wiegebehälter 4 wirksame Schüttgutsäule bilden kann. In der Zeichnung ist dieser Effekt an der Verteilung des mit Punkten wiedergegebenen Schüttgutes erkennbar.

Um gravimetrisch zu dosieren, liefert die Verwiegeeinheit 6a,6b an die Steuereinrichtung 12 Meßwerte über das Gewicht des mit Schüttgut gefüllten Behälters 4. Das Gewicht des Schüttgutes im Behälter 4 vermindert sich entsprechend dem unmittelbaren Abzug von Schüttgut durch die Lochplatte 10. Über die Anzahl der Dosierkammern 10a, die pro Zeiteinheit die Austragsöffnung 5b passieren und die an die Steuereinrichtung 12 gelieferten Meßwerte für das Gewicht läßt sich deshalb bestimmen, wie groß das Gewicht ist, das eine Dosierkammer 10a an Schüttgut aufnehmen kann. Das bedeutet, daß durch Einstellung der Drehzahl über den Antrieb 11 gravimetrisch die ausgetragene Schüttgutmenge dosiert werden kann.

## Patentansprüche

1. Dosiervorrichtung für Schüttgut mit einem auffüllbaren, in seinem Boden (5a) eine Austragsöffnung (5b) aufweisenden Behälter (5) und einer über dem Behälterboden (5a) angeordneten, drehbar angetriebenen Lochplatte (10), deren als Dosierkammern (10a) ausgebildete, bei Drehung die Austragsöffnung (5b) überstreichende Löcher bodenseitig bis auf die Austragsöffnung (5b) und auf der dem Innenraum des Behälters (5) zugewandten Seite im Bereich der Austragsöffnung (5b) durch stationäre Abdeckungen (5a,13) abgedeckt sind,
**dadurch gekennzeichnet,** daß in dem Behälter (5) ein mit einem unteren, seitlich angeordneten Materialauslauf (4a) versehener Wiegebehälter (4) frei beweglich von einer Verwiegeeinheit (6a,6b) getragen ist, wobei der seitlich angeordnete Materialauslauf mit geringem Abstand von der Lochplatte (10) über deren nicht abgedecktem Bereich angeordnet ist.

2. Dosiervorrichtung nach Anspruch 1,
**dadurch gekennzeichnet,** daß die auf der dem Innenraum des Behälters (5) zugewandten Seite der Lochplatte (10) angeordnete Abdeckung (13) mit einem die Lochplatte (10) überstreichenden Abstreifer (13a) versehen ist.

3. Dosiervorrichtung nach Anspruch 1,
**dadurch gekennzeichnet,** daß der Wiegebehälter (4) und dessen Verwiegeeinheit (6a,6b) eine Baueinheit bilden, die von einem als Adapter ausgebildeten Zwischenstück (7) getragen ist, das einerseits an dem Füllbehälter (2) und andererseits an dem die Lochplatte (10) aufnehmenden Behälter (5) angeschlossen ist.

4. Dosiervorrichtung nach einem der Ansprüche 1 bis 3,
**gekennzeichnet durch** eine Steuereinrichtung (12) für den Antrieb (11) der Lochplatte (10), die in Abhängigkeit von von der Verwiegeeinheit (6a,6b) gelieferten Meßwerten über das aktuelle Gewicht des Wiegebehälters (4) die Drehzahl der Lochplatte (10) steuert.

5. Dosiervorrichtung nach einem der Ansprüche 1 bis 4, **dadurch gekennzeichnet,** daß der Behälter (5) über einen chargeweise entleerbaren Füllbehälter (2) auffüllbar ist.
